(19) Europäisches Patentamt
European Patent Office
Office européen des brevets

(11) EP 0 872 047 B1

(12) EUROPEAN PATENT SPECIFICATION

(45) Date of publication and mention
of the grant of the patent:
15.09.1999 Bulletin 1999/37

(51) Int Cl.⁶: H04B 7/26

(21) Application number: 96944448.8

(86) International application number:
PCT/US96/20162

(22) Date of filing: 23.12.1996

(87) International publication number:
WO 97/24820 (10.07.1997 Gazette 1997/30)

(54) **HIGH POWER SHORT MESSAGE SERVICE USING TDMA FRAMES**

TDMA-RAHMEN VERWENDENDER HOCHPEGELIGER KURZNACHRICHTENDIENST

SERVICE HAUTE PUISSANCE DE MESSAGERIE BREVE PAR TRAMES AMRT

(84) Designated Contracting States:
DE FR GB SE

(30) Priority: 27.12.1995 US 578945

(43) Date of publication of application:
21.10.1998 Bulletin 1998/43

(73) Proprietor: ERICSSON INC.
Research Triangle Park, NC 27709 (US)

(72) Inventors:
• CHENNAKESHU, Sandeep
Cary, NC 27513 (US)
• RYDBECK, Nils
Cary, NC 27511 (US)
• HASSAN, Amer, A.
Cary, NC 27513 (US)
• DENT, Paul, W.
S-240 36 Stehag (SE)

(74) Representative:
O'Connell, David Christopher et al
Haseltine Lake & Co.,
Imperial House,
15-19 Kingsway
London WC2B 6UD (GB)

(56) References cited:
EP-A- 0 535 812        EP-A- 0 565 507
EP-A- 0 671 824        WO-A-94/13113
WO-A-95/12931        WO-A-95/31878
WO-A-96/04718

## Description

## Field of the Invention

The present invention generally relates to radiocommunication systems and more particularly relates to a system and method for reliably transmitting alphanumeric messages via radiocommunication signals under non-ideal conditions.

## Background of the Invention

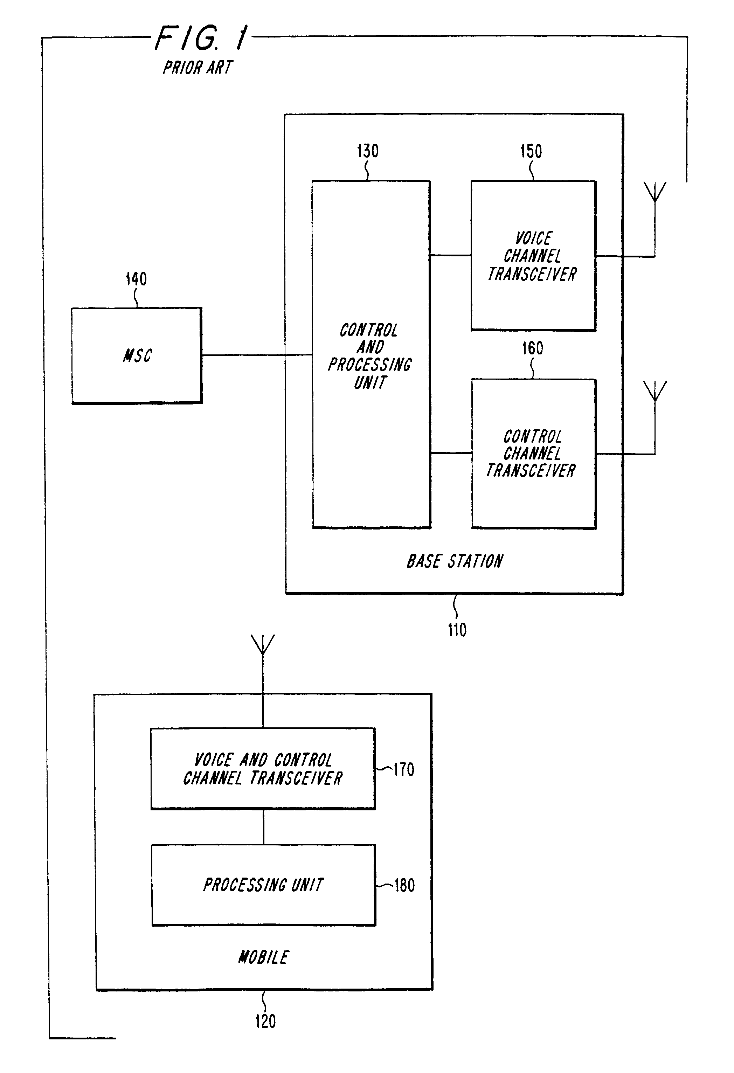

Referring to Figure 1, a typical cellular mobile radiocommunication system is shown. The typical system includes a number of base stations similar to base station 110 and a number of mobile units or stations similar to mobile 120. Voice and/or data communication can be performed using these devices or their equivalents. The base station includes a control and processing unit 130 which is connected to the MSC (mobile switching center) 140 which in turn is connected to the public switched telephone network (not shown).

The base station 110 serves a cell and includes a plurality of voice channels handled by voice channel transceiver 150 which is controlled by the control and processing unit 130. Also, each base station includes a control channel transceiver 160 which may be capable of handling more than one control channel. The control channel transceiver 160 is controlled by the control and processing unit 130. The control channel transceiver 160 broadcasts control information over the control channel of the base station or cell to mobiles locked to that control channel. The voice channel transceiver broadcasts the traffic or voice channels which can include digital control channel location information.

When the mobile 120 first enters an idle mode, it periodically scans the control channels of base stations like base station 110 for the presence of a paging burst addressed to the mobile 120. The paging burst informs mobile 120 which cell to lock on or camp to. The mobile 120 receives the absolute and relative information broadcast on a control channel at its voice and control channel transceiver 170. Then, the processing unit 180 evaluates the received control channel information which includes the characteristics of the candidate cells and determines which cell the mobile should lock to. The received control channel information not only includes absolute information concerning the cell with which it is associated, but also contains relative information concerning other cells proximate to the cell with which the control channel is associated. These adjacent cells are periodically scanned while monitoring the primary control channel to determine if there is a more suitable candidate. Additional information relating to specifics of mobile and base station implementations can be found in EP-A-0 595 781 to P. Dent and B. Ekelund. It will be appreciated that the base station may be replaced by one or more satellites in a satellite-based mobile radiocommunication system.

To increase radiocommunication system capacity, digital communication and multiple access techniques such as Frequency Division Multiple Access (FDMA), Time Division Multiple Access (TDMA), and Code Division Multiple Access (CDMA) may be used. The objective of each of these multiple access techniques is to combine signals from different sources onto a common transmission medium in such a way that, at their destinations, the different channels can be separated without mutual interference. In a FDMA system, users share the radio spectrum in the frequency domain. Each user is allocated a part of the frequency band which is used throughout a conversation. In a TDMA system, users share the radio spectrum in the time domain. Each radio channel or carrier frequency is divided into a series of time slots, and individual users are allocated a time slot during which the user has access to the entire frequency band allocated for the system (wideband TDMA) or only a part of the band (narrowband TDMA). Each time slot contains a "burst" of information from a data source, e.g., a digitally encoded portion of a voice conversation. The time slots are grouped into successive TDMA frames having a predetermined duration. The number of time slots in each TDMA frame is related to the number of different users that can simultaneously share the radio channel. If each slot in a TDMA frame is assigned to a different user, the duration of a TDMA frame is the minimum amount of time between successive time slots assigned to the same user. CDMA combines FDMA and TDMA. In a CDMA system, each user is assigned a unique pseudorandom user code to uniquely access the frequency time domain. Examples of CDMA techniques include spread spectrum and frequency hopping.

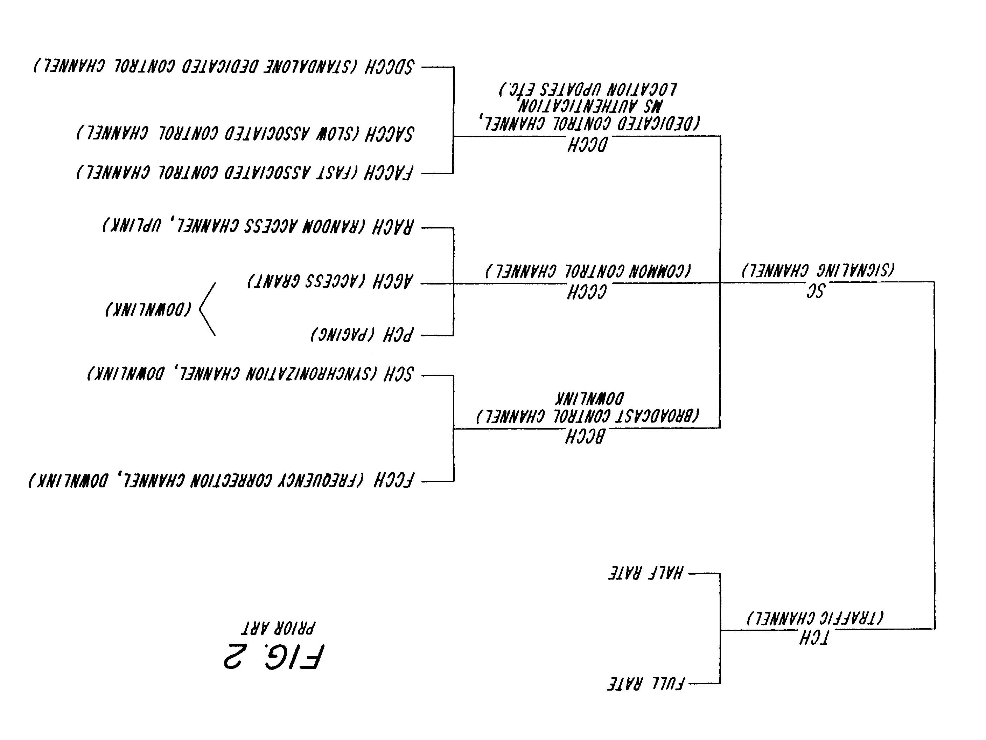

In a TDMA system, the successive time slots assigned to the same user, which are usually not consecutive time slots on the radio carrier, constitute the user's digital traffic channel, which is considered to be a logical channel assigned to the user. The organization of TDMA channels, using the GSM standard as an example, is shown in FIG. 2. The TDMA channels include traffic channels TCH and signalling channels SC. The TCH channels include full-rate and half-rate channels for transmitting voice and/or data signals. The signalling channels SC transfer signalling information between the mobile unit and the satellite (or base station). The signalling channels SC include three types of control channels: broadcast control channels (BCCHs), common control channels (CCCHs) shared between multiple subscribers, and dedicated control channels (DCCHs) assigned to a single subscriber. A BCCH typically includes a frequency correction channel (FCH) and a synchronization channel (SCH), both of which are downlink channels. The common control channels (CCCHs) include downlink paging (PCH) and access grant (AGCH) channels, as well as the uplink random access channel (RACH). The dedicated control channels DCCH include a fast associated control channel (FACCH), a slow associated control channel (SACCH), and a standalone dedicated control channel (SDCCH). The slow associated control channel is assigned to a traffic (voice or data) channel or to a standalone dedicated control channel (SDCCH). The SACCH channel provides power and frame adjustment and control information to the mobile unit.

The frequency correction channel FCH of the broadcast control channel carries information which allows the mobile unit to accurately tune to the base station. The synchronization channel SCH of the broadcast control channel provides frame synchronization data to the mobile unit.

Using a GSM-type system as an example, the slow associated control channel SACCH can be formed by dedicating every 26th TDMA frame to carrying SACCH information. Each SACCH frame includes 8 time slots (1 SACCH slot for each traffic slot in the frame), allowing one unique SACCH channel for each mobile communication link. The base station or satellite sends commands over the SACCH channel to advance or retard the transmission timing of the mobile unit to achieve time alignment between different mobile bursts received at the base station or satellite.

The random access channel RACH is used by the mobiles to request access to the system. The RACH logical channel is a unidirectional uplink channel (from the mobile to the base station or satellite), and is shared by separate mobile units (one RACH per cell is sufficient in typical systems, even during periods of heavy use). Mobile units continuously monitor the status of the RACH channel to determine if the channel is busy or idle. If the RACH channel is idle, a mobile unit desiring access sends its mobile identification number, along with the desired telephone number, on the RACH to the base station or satellite. The MSC receives this information from the base station or satellite and assigns an idle voice channel to the mobile station, and transmits the channel identification to the mobile through the base station or satellite so that the mobile station can tune itself to the new channel. All time slots on the RACH uplink channel are used for mobile access requests, either on a contention basis or on a reserved basis. Reserved-basis access is described in EP-A-0 623 263. One important feature of RACH operation is that reception of some downlink information is required, whereby mobile stations receive real-time feedback for every burst they send on the uplink. This is known as Layer 2 ARQ, or automatic repeat request, on the RACH. The downlink information preferably comprises twenty-two bits that may be thought of as another downlink sub-channel dedicated to carrying, in the downlink, Layer 2 information specific to the uplink. This flow of information, which can be called shared channel feedback, enhances the throughput capacity of the RACH so that a mobile station can quickly determine whether any burst of any access attempt has been successfully received. As shown in FIG. 2, this downlink information is transmitted on channel AGCH.

Transmission of signals in a TDMA system occurs in a buffer-and-burst, or discontinuous-transmission, mode: each mobile unit transmits or receives only during its assigned time slots in the TDMA frames on the mobile unit's assigned frequency. At full rate, for example, a mobile station might transmit during slot 1, receive during slot 2, idle during slot 3, transmit during slot 4, receive during slot 5, and idle during slot 6, and then repeat the cycle during succeeding TDMA frames. The mobile unit, which may be battery-powered, can be switched off (or "sleep") to save power during the time slots when it is neither transmitting nor receiving.

To increase mobility and portability, radiocommunication subscribers tend to prefer mobile units having a relatively small, omnidirectional (and accordingly, less powerful) antenna over mobile units having a large or directional antenna. Because of this preference, it is sometimes difficult to provide sufficient signal strength for the exchange of communication signals between typical mobile units having a small, omnidirectional antenna and a mobile switching center (MSC) or satellite. This problem is particularly serious in satellite-based mobile radiocommunications.

A satellite-based mobile radiocommunication system provides radiocommunication services to particular geographical areas of the earth using one or more partially overlapping satellite beams. Each satellite beam has a radius of up to about 1000 KM. Due to the power limitations of a satellite, it is not practical to provide a high link margin in every beam simultaneously.

Because mobile satellite links are severely power limited, communication is typically limited to line-of-sight channels with Ricean fading. Ricean fading occurs from a combination of a strong line-of-sight path and a ground-reflected wave, along with weak building-reflected waves. These channels require a communications link margin of approximately 10 dB or more to achieve voice communication in ideal or near-ideal conditions, such as when the mobile radiotelephone unit antenna is properly deployed and the unit is in an unobstructed location. In these near-ideal channels, the mobile unit can successfully monitor the paging channel to detect incoming calls. In non-ideal conditions, such as when the mobile unit antenna is not deployed or the mobile unit is in an obstructed location (e.g., inside a building) reflected waves, including ground-reflected and building-reflected waves, become dominant. The channels in these non-ideal conditions are characterized by flat Rayleigh fading (the most severe type of fading) with severe attenuation. In such channels, a link margin of as much as 30 dB or more is required to achieve reliable voice or data communication, and the mobile unit in this case cannot monitor the paging channel to detect incoming calls. In these non-ideal conditions, a short message service (SMS) is desirable. Due to the power limitations of the satellite, SMS is particularly effective when used in non-ideal conditions to alert a mobile station user of an incoming call. The mobile station user may then change locations to receive or return the call. The term "link margin" or "signal margin" refers to the additional power required to offer adequate service over and above the power required under ideal conditions- that is, a channel having no impairments other than additive white Gaussian noise (AWGN). "Impairments" include fading of signal amplitude, doppler shifts, phase variations, signal shadowing or blockage, implementation losses, and anomalies in the antenna radiation pattern.

Whether transmitting voice or data, it is frequently desirable to increase the signal margin to ensure reliable radiocommunication performance, particularly in power-limited satellite applications. Known methods of increasing the link margin of a signal include expanding the channel bandwidth to achieve frequency selectivity or to use forward error correction coding (such as convolutional coding), increasing signal power, and bit repetition (which may be viewed as a form of forward error correction coding). Each of these methods has significant limitations. Bandwidth expansion is typically achieved by known methods such as signal spreading and low bit rate error correction coding, and results in a signal which is less sensitive to fading. Bandwidth expansion reduces spectrum allocation efficiency. Further, in a SMS application, if the expanded bandwidth of the voice channel is different from the bandwidth of the message channel, two separate and complete radios (one for each service) will be required in the mobile unit, thereby complicating its design. Also, a coherent Rake receiver or equalizer is also typically required to reduce delay spread, further complicating the design of the mobile unit. Bandwidth expansion may also be implemented by repeated transmissions of the entire voice or data message. However, under the non-ideal conditions of interest, this method is not effective because each repetition is typically below the noise floor (that is, does not have a sufficient margin), resulting in a high error rate and preventing the coherent integration of the repetitions.

Increasing signal power may also be used to provide a higher margin. Due to the power limitations of the satellite, this is typically not a practical approach. In addition to increasing the cost of the system, increased transmission power also makes it more difficult to control co-channel interference, particularly in TDMA systems with narrow re-use margins. Accordingly, large power increases from the satellite to the mobile unit may be provided only during periods of relatively light use. Further, because the mobile unit is even more power limited than the satellite, this technique is typically practical only in one direction, from the satellite to the mobile unit.

Bit repetition may also be used to increase the margin. Bit repetition results in a lower error rate than message repetition, particularly in non-ideal conditions. Bit repetition causes transmission delay, which is not desirable for voice signals, for obvious reasons. However, transmission delay may be acceptable for data communications, such as a SMS feature, provided that the delay is kept to a reasonable minimum. Bit repetition is achieved by transmitting individual bits or modulation symbols, or packets of bits or modulation symbols, a plurality of times such that all repetitions are contiguous or contained within the same time slot or slots of successive TDMA frames. The receiver integrates the energy from each repetition to create a signal having a higher margin. As noted above, bit repetition can cause significant delay, depending upon the length of the message. To achieve a 30 dB signal margin, each bit will have to be repeated 1000 times. A typical short message has between 32 and 64 characters in the GSM system, the European digital standard, up to 245 characters in the DAMPS (Digital Advanced Mobile Phone Service) system currently used in the United States, and up to 160 characters in the DECT (Digital European Cordless Telephone) system. Assuming a GSM system having TDMA frames of 18.64 ms, with 16 slots per frame and 114 data bits/slot, the minimum delay for receiving a 64 character message, not including propagation time, is as follows:

64 bits X 8 bits/character X 1000 repetitions/bit X 18.64 ms/slot X 1/114 slot/data bit = 84 seconds.

Such a delay is highly undesirable, even for data transmission. Accordingly, it would be desirable for a radiocommunication system to allow for transmission of signals at an increased signal margin without significant delay and without a significant increase in power.

It would be further desirable for a communication system to allow for transmission of signals with an increased signal margin without requiring expansion of the channel bandwidth.

It would also be desirable for a TDMA communication system to allow for transmission of signals with an increased signal margin without requiring a change in the structure or organization of TDMA frames.

It would be further desirable for a mobile radiocommunication system to allow for transmission of data messages originating from either a mobile unit or from a satellite or base station with an increased signal margin.

It would be further desirable for a communication system to selectively increase the signal margin of a communication link for the transmission of data messages.

While numerous enhancements to TDMA communication systems have been proposed, they do not adequately address the problems noted above. For example, WO 95/31878 discloses a method for increasing the transmission speed of data in a TDMA system. According to the disclosed method, a high-speed data signal is split into multiple lower speed signals, a mobile station is allocated a corresponding number of time slots from each TDMA frame, and each of the lower speed signals is transmitted over a different one of the allocated time slots. However, this document does not address the transmission of data messages at an increased power level. Further, this document does not address the problem of delivering a message to a shadowed mobile unit in a power limited (e.g., satellite-based) communication system.

WO 95/12931 discloses a method of communicating information to a remote station by grouping time slots into superframes, each superframe including a plurality of paging slots. The paging slots are grouped into a plurality of paging frames for sending messages in successive hyperframes. Each superframe can include time slots comprising a logical paging channel. However, this document does not address the transmission of data messages at an increased power level. Further, this document does not address the problem of delivering a message to a shadowed mobile unit in a power-limited (e.g., satellite-based) communication system.

EP 0 671 824 A1 (SIEMENS) is directed to a method for increasing transmission speed in a digital telecommunication system. According to the method, when a higher transmission speed is required, two or more channels are combined to form a multiple channel which is assigned to the subscriber requiring increased transmission speed. This document does not address the problem of delivering a message to a shadowed mobile unit in a power-limited (e.g., satellite-based) communication system.

Therefore, none of these documents adequately address the problems addressed by the present invention.

## Summary of the Invention

The above-noted and other limitations of conventional communication systems and methods are overcome by the present invention, which provides for a high-penetration transmission method for transmitting short alphanumeric messages in which signal margin is increased by a combination of bit repetition and a relatively small increase in power. According to exemplary embodiments, the combination of bit repetition and a relatively small increase in power avoids the unacceptable delays characteristic of systems which rely solely on repetition to increase the signal margin. Likewise, the combination of repetition and a relatively small increase in power avoids the co-channel interference problems of systems which rely solely on increased power to increase the signal margin.

According to an exemplary embodiment of the present invention, a radiocommunication system is provided with a short message service feature for transmitting alphanumeric messages between a control station, such as a satellite, and a transmitter/receiver, such as a mobile unit. Selected ones of the TDMA frames are assigned as message frames, and each message frame includes a number of data slots for transmitting data messages. In order to ensure reliable transmission over channels having severe attenuation, the data message is encoded; the encoded message is divided into packets or groups of one or more bits each; each packet is transmitted, at a power level greater than the power level for voice transmission, multiple times over the data slots of the message frames, using the same time slot or slots for each transmission to a particular subscriber; and the transmissions are integrated and checked for errors at the receiver to form a signal having an increased margin.

## Brief Description of the Drawings

The foregoing objects, features and advantages of the present invention will be more readily understood upon reading the following detailed description in conjunction with the drawings in which:

FIG. 1 is a block diagram of an exemplary mobile radiocommunication system;
FIG. 2 is a diagram showing the organization of channels in a typical GSM digital radiocommunication system;
FIG. 3 is a diagram of a satellite-based mobile radiocommunication system in which the signal transmission method of the present invention may be implemented;
FIG. 4 is a flow chart describing the transmission of a short message according to an embodiment of the present invention; and
FIG. 5 is a diagram showing the format of an SMS frame according to an embodiment of the present invention.

## Detailed Description of the Preferred Embodiments

While the following description is directed toward a short message service implemented in a satellite-based radiocommunication system incorporating satellites and mobile radiocommunication units, it will be appreciated that the present invention may also be applied to other types of communication systems which include suitable transmitter/receiver units.

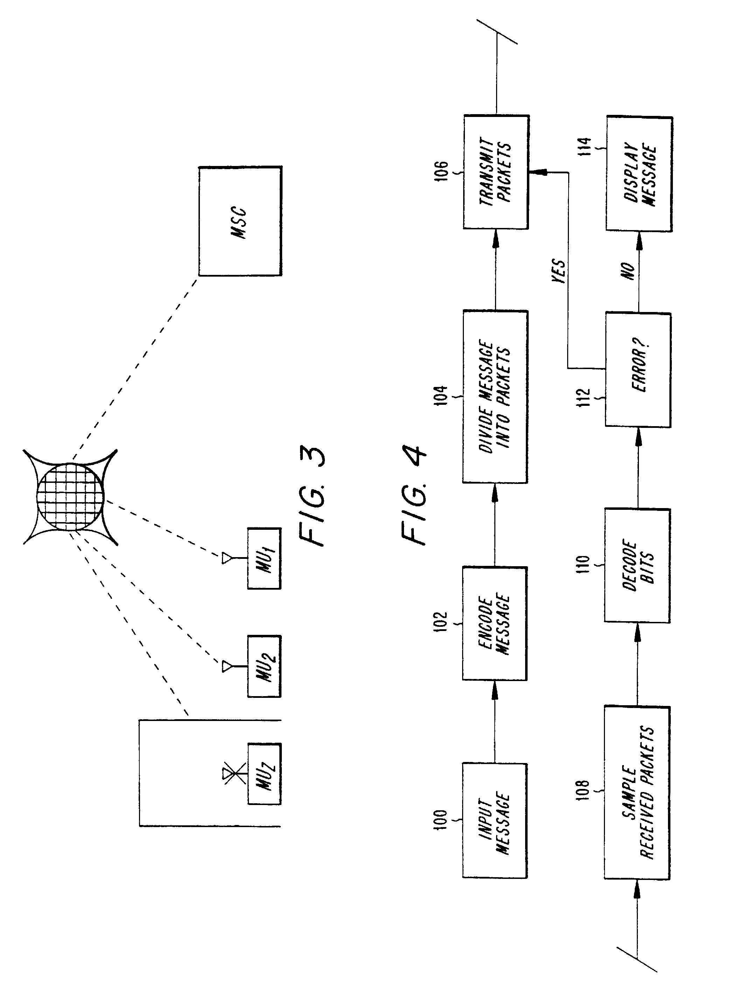

In a satellite-based mobile radiocommunication system, a communication link for transmitting voice or data may be established between a mobile station and either a standard telephone or a second mobile station through one satellite, multiple satellites, or a combination of one or more satellites and the PSTN (public switched telephone network). Such a system, as shown in FIG. 3, may be desirable to achieve a broad geographical coverage in which few or no base stations are present, and additional base stations are not practical, such as in rural areas. Due to the inherent power limitations of satellites, voice communications links between the satellite and the mobile station require ideal or near-ideal conditions; that is, conditions such as line-of-sight communication with the mobile station's antenna properly deployed. In non-ideal conditions, such as when the mobile station is shadowed (e.g., inside a building, etc.) or when the mobile antenna is not properly deployed, the power or signal margin requirements for communication increases significantly due to the increased attenuation in the channel. In such situations (shown as MUz in FIG. 3), Rayleigh fading often prevents satisfactory communication, and it is therefore desirable to send a short alphanumeric message to the mobile station. The message may be used, for example, to inform the subscriber of an incoming call. The present invention ensures reliable transmission of the message by providing for an efficient technique for increasing signal margin without significant delay, power increase, or co-channel interference.

For purposes of illustration only, and without limiting the scope of the invention, a satellite-based GSM radiocommunication system using TDMA channels may be assumed to exhibit the following conditions. The communication channel has no line of sight component and is subject to flat Rayleigh fading with severe attenuation. As will be appreciated by those of skill in the art, Rayleigh (or multipath) fading is a phenomenon which occurs when multipath waves form standing-wave pairs due to reflection from the physical structures in a service area. The standing-wave pairs summed together form an irregular wave fading structure. When the mobile unit is stationary, it receives a constant signal. However, when the mobile unit is moving, the fading structure causes fading to occur which increases as the mobile unit moves faster. The mean signal level of the non-ideal Rayleigh channel is approximately 20-30 dB below the signal level of a near-ideal line-of-sight channel.

In order to ensure reliable transmission of a short message to the mobile unit in non-ideal conditions, the signal margin must be increased. According to the present invention, bit repetition and power increase can be combined to provide an increased signal margin without significant delay.

It will be appreciated that decibels (dB) are units used to express ratios of power, current, or voltage. Specifically, a power ratio (P2/P1) may be expressed in decibels by the formula dB = 10 log (P2/P1). A signal margin of 30 dB requires a power ratio of 1000, since 10 log 1000 = 30. Thus, to achieve this signal margin solely by bit repetition, each bit must be repeated 1000 times and the signal margin from each repetition must be integrated at the receiver, resulting in the 82 second delay calculated above. However, to achieve a 15 dB margin, the required power ratio is only 31.623, since 10 log 31.623 = 15. Thus, a 30 dB signal margin may be provided by increasing the power by 15 dB and repeating each bit approximately 31 times. Using this technique, the bit-repetition delay for a 64 character message is (64 characters X 8 bits/character X 31 repeats/bit X 18.64 ms/slot X 1/114 slot/bits) approximately 2.5 seconds. As a result, the bit repetition delay is maintained at a reasonable level, and the power increase is also maintained at a reasonable level, thereby avoiding co-channel interference. It will be appreciated that many different combinations of repetitions and power increases are possible to achieve successful communication in Rayleigh fading environments without significant delay. Further, rather than repeating individual bits of a digital signal, groups of bits may be repeated.

To implement the technique of the present invention, the power increase from the satellite to the mobile station may be provided by averaging a power load across multiple users. That is, communication channels used by mobile units in near-ideal conditions might have their power reduced to increase the power supply to a mobile unit or units in the non-ideal conditions. Power increase may also be provided by time averaging, in which individual slots in consecutive TDMA frames are transmitted at an increased power level. It will be appreciated that the power increase from the satellite to the mobile station may also be achieved by other techniques known in the art.

The power limitations of the mobile unit are even more severe than the power limitations of the satellite. Thus, it is even more difficult to increase power for communication from the mobile to the satellite. Such communication is necessary to send a message or acknowledge receipt of a message. According to one embodiment of the present invention, the power increase from the mobile unit to the satellite may be achieved by allowing the mobile unit to transmit on all time slots of the random access channel RACH. Bit repetition may also be implemented by the mobile unit to further effectively increase the margin of the signal transmitted to the satellite. Since acknowledgement by the mobile unit over the RACH channel may be accomplished by a signal having a low information rate, a higher number of sync bits and a higher number of bit and message repetitions relative to the forward channel can be used to compensate for the lower transmission power of the mobile unit. Preferably, the mobile unit transmits consecutive repetitions on separate carrier frequencies to decorrelate the repetitions. Because the message is short, the transmission time will be short and the average transmitted power will be acceptable using this system.

Referring now to FIG. 4, a flow chart describing the transmission of a short message using the transmission method of the present invention is shown. Referring now to FIG. 4, a flow chart describing the transmission of a short message using the transmission method of the present invention is shown. In step 100, a sending party inputs a message to be transmitted to a receiving subscriber. The message may be input into the communication system directly by the sending party through a mobile unit, a standard telephone, a computer terminal, or equivalent device, or the message may be input indirectly by calling an operator at a service center who inputs the message into the system.

In step 102, the information bits comprising the short message are encoded by an encoder located at the transmitter with an error detection code, such as CRC. The encoded message constitutes one or more codewords, each containing codeword bits or symbols. It should be recognized that the transmitter may be the satellite, a base station, or a mobile unit. In step 104, bit repetition can be employed, such that each of the codeword bits or symbols output by the encoding means are repeated N times to form a packet containing N bits. It will be apparent that, instead of repeating individual bits or symbols, groups of two or more bits or symbols, or the entire codeword or codewords could also be repeated. Packets are then transmitted such that each slot within a TDMA frame includes one or more packets of repeated bits, error detection coding bits, and a sync burst to enable the receiver to estimate the channel quality. All bits comprising the encoded short message are transmitted in this fashion. If bit repetition and message repetition are employed, once the entire encoded message has been transmitted, the transmission of the message (in the form of packets ofN codeword bits) can be repeated M times to achieve the desired signal margin. It will be appreciated that, since the short message may be transmitted from a satellite, base station, or mobile station, encoding and transmitting functions are provided in each of these devices. It will also be appreciated that, in order to implement the technique of the present invention, means are included in the transmitter to determine the number of bit repetitions N, message repetitions M, and power increase necessary to achieve the signal margin required for successful transmission of the message.

In step 108, the receiving device (i.e., the mobile unit, satellite, base station, or equivalent device) samples the received signal, including the repeated encoded message bits, error detection bits, and channel quality estimation bits, and generates a metric sum of the form

$$Y_j = \sum_{i=1}^{N} |r_{ij} - \hat{c}_j s|^2 \quad ,$$

where $r_{ij}$ is the sampled received signal corresponding to the ith repetition of the information bit or symbol S in packet repeat j, and $C_j$ is the corresponding estimate of channel quality. In step 110, a decoder contained in the receiving device decodes each encoded bit or symbol in the TDMA slot from the metric sums, using soft combining or majority logic voting, or other suitable decoding methods. To implement soft combining, the decoder adds metric sums as

$$Y = \sum_{j=1}^{M} Y_j$$

and makes a bit or symbol decision based on the sum. To implement majority logic voting, the decoder makes a preliminary bit or symbol decision for each metric $y_j$ and then a makes a final bit or symbol decision by comparing all of the preliminary decisions. Thus, if the decoder has made M preliminary decisions, the decoder will determine that the corresponding information bit is a 1 if more than half of the preliminary decisions were 1; otherwise, the decoder will determine that the corresponding information bit is a 0. The same logic is used to decode a bit that is a 0. To prevent an error which might result if exactly half of the preliminary decisions are 0 and exactly half of the preliminary decisions are 1, M is chosen to be an odd number. The decoded bits are combined coherently and the multiple transmissions of the message are combined coherently to generate a message signal having an increased margin.

In step 112, an error detector contained in the receiving apparatus detects errors based on the CRC error detection coding provided at the transmitting apparatus. If no errors are detected, the message is displayed on the receiving subscriber's mobile unit in step 114. If an error is detected, then the message is not displayed at the receiving apparatus, the user is notified of an erroneous message by a displayed error message or by an audio signal, and the receiver requests the transmitter to retransmit message or the erroneous parts of the message in accordance with a bidirectional radio protocol described in more detail below.

According to the present invention, repeated transmission of messages may be used in combination with repetition of individual portions of a message. That is, individual portions of the message may be transmitted multiple times, and when the entire message has been transmitted by means of the repeated transmissions of the message portions, the entire message may be transmitted again.

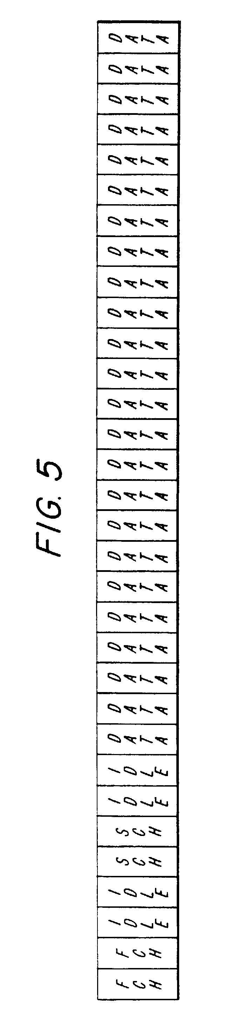

To implement a satellite-based mobile communication having a SMS feature according to the present invention, a message channel is formed by "stealing" or borrowing frames from the slow associated control channel SACCH. For example, the transmitter can assign every 8th frame of the SACCH channel for use as a message frame to carry SMS information; this implementation would provide one SMS frame for each 104 regular TDMA frames, or one SMS frame approximately every 1.92 seconds. It will be appreciated that by using every eighth SACCH frame, the SACCH date rate is reduced by one-eighth, which does not adversely affect the system. In the SMS channel, an exemplary frame format is shown in FIG. 5, and includes two forward correction channel (FCH) slots, two idle slots, two synchronization channel (SCH) slots, two additional idle slots, and 24 data slots, for a total of 32 slots for each SMS frame.

The 24 data slots are used to transmit message information. Each one of the 24 data slots is assigned to a corresponding mobile unit, such that each subscriber receives one data slot per SMS frame. Thus, the data slot or slots in each message frame which are assigned to a particular subscriber's mobile unit constitute a message channel for that subscriber. It will be appreciated that alternate frame formats may be used, and that multiple data slots may be assigned to each mobile unit. Further, frames other than the SACCH frames may be used as message frames.

An encoder in the satellite suitably encodes message data. Bit and/or message repetition, in combination with increased transmission power, can also be implemented by the transmitter, as described above. Preferably, in this SMS implementation, each bit is transmitted three times, each message or portions thereof are transmitted three times, and the SMS frames are transmitted at approximately 6 dB more power than the voice frames and slots of the TDMA communication link. 104 frames, or approximately 1.92 seconds, are required for synchronization in this embodiment. Since one active SMS frame occurs for each 104 TDMA frames in this embodiment, the duty cycle is approximately 1%.

Because the short message service is implemented by using the relatively infrequent stealing or borrowing of frames, it will be appreciated that the satellite or cellular system is not significantly affected in an adverse way.

While the foregoing description includes numerous details and specificities, it is to be understood that these are merely illustrative of the features and principles of the present invention, and are not to be construed as limitations. Many modifications will be readily apparent to those of ordinary skill in the art which do not depart from the scope of the invention, as defined by the following claims.

## Claims

1. A method for transmitting a data message between a control station and a transmitter/receiver in a TDMA communication system in which a TDMA communication channel is established at a first power level between the control station and the transmitter/receiver, comprising the steps of:

   assigning one or more frames from the TDMA communication system as message frames, each message frame including a plurality of data slots; and
   transmitting the data message to the transmitter/receiver at a second power level higher than the first power level over one or more of the data slots of each of the message frames.

2. The method of claim 1, wherein each message frame further includes forward correction channel slots, synchronization channel slots, and idle slots.

3. The method of claim 1, wherein each message frame is a slow associated channel frame of the TDMA communication system.

4. The method of claim 1, wherein the step of transmitting is performed a plurality of times.

5. The method of claim 4, wherein the step of transmitting is performed three times.

6. The method of claim 1, wherein each data slot in each message frame is assigned to a different transmitter/receiver.

7. The method of claim 1, wherein each data slot includes a plurality of data bits, the data codeword includes message bits, and each message bit is specified by a plurality of data bits.

8. The method of claim 1, further comprising the step of encoding the data message with error detection coding prior to the step of transmitting.

9. A TDMA communication system, comprising:

   means for establishing a TDMA communication channel at a first power level between a control station and a transmitter/receiver, the TDMA communication channel including one or more time slots from each of one or more TDMA frames;
   means for assigning selected TDMA frames as message frames, each message frame including a plurality of message slots; and
   means for transmitting a data message to the transmitter/receiver at a second power level higher than the first power level over one or more of the message slots in each message frame.

10. The system of claim 9, wherein each message frame further includes forward correction channel slots, synchronization channel slots, and idle slots.

11. The system of claim 9, wherein each selected message frame is a slow associated channel frame.

12. The system of claim 9, wherein the data message is transmitted a plurality of times.

13. The system of claim 12, wherein the data message is transmitted three times.

14. The system of claim 9, wherein each data slot in each message frame is assigned to a different transmitter/receiver.

15. The system of claim 9, wherein each data slot includes a plurality of data bits, the data message includes message bits, and each message bit is specified by a plurality of data bits.

16. The system of claim 9, wherein the data message is encoded.

17. The system of claim 16, wherein the data message is encoded with CRC error detection coding.

18. A method for transmitting data messages in a TDMA communication system, comprising the steps of:

assigning a plurality of TDMA frames as message frames, each message frame including a plurality of data slots, wherein one or more of the data slots from each message frame are assigned as a separate communication channel for each of a plurality of transmitter/receivers, and wherein the remainder of data slots from each frame carry communication information transmitted at first power level; and
transmitting a data message over each separate communication channel at a second power level higher than the first power level.

19. The method of claim 18, wherein each message frame further includes forward correction channel slots, synchronization channel slots, and idle slots.

20. The method of claim 18, wherein each message frame is a slow associated channel frame.

21. The method of claim 18, wherein the step of transmitting is performed a plurality of times.

22. The method of claim 21, wherein the step of transmitting is performed three times.

23. The method of claim 18, wherein each data slot in each message frame is assigned to a different transmitter/receiver.

24. The method of claim 18, wherein each data slot includes a plurality of data bits, the data message includes message bits, and each message bit is specified by a plurality of data bits.

25. The method of claim 18, further comprising the step of encoding each data message with error detection coding.

**Patentansprüche**

1. Verfahren zum Übertragen einer Datenmeldung zwischen einer Steuerstation und einem Sende/Empfänger in einem TDMA-Kommunikationssystem, in dem ein TDMA-Kommunikationskanal bei einem ersten Energieniveau zwischen der Steuerstation und dem Sender/Empfänger eingerichtet wird, enthaltend die Schritte:

Zuordnen von einem Rahmen oder mehreren Rahmen von dem TDMA-Kommunikationssystem als Meldungsrahmen derart, daß jeder Meldungsrahmen mehrere Datenschlitze enthält; und

Senden der Datenmeldung zu dem Sender/Empfänger bei einem zweiten Energieniveau, das höher als das erste Energieniveau ist, über einen Datenschlitz oder mehrere Datenschlitze von jedem der Meldungsrahmen.

2. Verfahren nach Anspruch 1, dadurch gekennzeichnet, daß jeder Meldungsrahmen ferner Vorwärtskorrektur-Kanalschlitze, Synchronisierungskanalschlitze und Leerlaufschlitze enthält.

3. Verfahren nach Anspruch 1, dadurch gekennzeichnet, daß jeder Meldungsrahmen ein Rahmen des langsamen zugeordneten Kanals des TDMA-Kommunikationssystems ist.

4. Verfahren nach Anspruch 1, dadurch gekennzeichnet, daß der Schritt zum Übertragen mehrfach durchgeführt wird.

5. Verfahren nach Anspruch 4, dadurch gekennzeichnet, daß der Schritt zum Übertragen dreimal durchgeführt wird.

6. Verfahren nach Anspruch 1, dadurch gekennzeichnet, daß jeder Datenschlitz in jedem Meldungsrahmen einem unterschiedlichen Sender/Empfänger zugeordnet wird.

7. Verfahren nach Anspruch 1, dadurch gekennzeichnet, daß jeder Datenschlitz mehrere Datenbits enthält, daß das Datencodewort Meldungsbits enthält, und jedes Meldungsbit durch mehrere Datenbits spezifiziert ist.

8. Verfahren nach Anspruch 1, dadurch gekennzeichnet, daß es ferner den Schritt zum Codieren der Datenmeldung mit einer Fehlerdetektionsmeldung vor dem Schritt des Sendens enthält.

9. TDMA-Kommunikationssystem, enthaltend:

   eine Vorrichtung zum Einrichten eines TDMA-Kommunikationskanals bei einem ersten Energieniveau zwischen einer Steuerstation und einem Sender/Empfänger, derart, daß der TDMA-Kommunikationskanal einen Zeitschlitz oder mehrere Zeitschlitze von jeweils einem TDMA-Rahmen oder mehreren TDMA-Rahmen enthält;

   eine Vorrichtung zum Zuordnen ausgewählter TDMA-Rahmen als Meldungsrahmen, derart, daß jeder Meldungsrahmen mehrere Meldungsschlitze enthält; und

   eine Vorrichtung zum Senden einer Datenmeldung zu dem Sender/Empfänger bei einem zweiten Energieniveau, das höher als das erste Energieniveau ist, über einen oder mehrere der Meldungsschlitze in jedem Meldungsrahmen.

10. System nach Anspruch 9, dadurch gekennzeichnet, daß jeder Meldungsrahmen ferner Vorwärtskorrektur-Kanalschlitze, Synchronisierungs-Kanalschlitze und Leerlaufschlitze enthält.

11. System nach Anspruch 9, dadurch gekennzeichnet, daß jeder ausgewählte Meldungsrahmen ein langsamer zugeordneter Kanalrahmen ist.

12. System nach Anspruch 9, dadurch gekennzeichnet, daß die Datenmeldung mehrere Male-übertragen ist.

13. System nach Anspruch 12, dadurch gekennzeichnet, daß die Datenmeldung dreimal übertragen ist.

14. System nach Anspruch 9, dadurch gekennzeichnet, daß jeder Datenschlitz in jedem Meldungsrahmen einem unterschiedlichen Sender/Empfänger zugeordnet ist.

15. System nach Anspruch 9, dadurch gekennzeichnet, daß jeder Datenschlitz mehrere Datenbits enthält, daß die Datenmeldung Meldungsbits enthält und daß jedes Meldungsbit durch mehrere Datenbits spezifiziert ist.

16. System nach Anspruch 9, dadurch gekennzeichnet, daß die Datenmeldung codiert ist.

17. System nach Anspruch 16, dadurch gekennzeichnet, daß die Datenmeldung mit einer CRC-Fehlerdetektionscodierung codiert ist.

18. Verfahren zum Übertragen von Datenmeldungen in einem TDMA-Kommunikationssystem, enthaltend die Schritte:

   Zuordnen mehrerer TDMA-Rahmen als Meldungsrahmen, derart, daß jeder Meldungsrahmen mehrere Datenschlitze enthält, daß ein Datenschlitz oder mehrere der Datenschlitze von jedem Meldungsrahmen als getrennter Kommunikationskanal für jeweils mehrere Sender/Empfänger zugeordnet ist und die verbleibenden Datenschlitze von jedem Rahmen Kommunikationsinformation bei dem ersten Energieniveau führen; und

übertragen einer Datenmeldung über jeden getrennten Kommunikationskanal bei einem zweite Energieniveau, das höher als das erste Energieniveau ist.

19. Verfahren nach Anspruch 18, dadurch gekennzeichnet, daß jeder Meldungsrahmen ferner Vorwärtskorrektur-Kanalschlitze, Synchronisierungs-Kanalschlitze und Leerlaufschlitze enthält.

20. Verfahren nach Anspruch 18, dadurch gekennzeichnet, daß jeder Meldungsrahmen ein langsamer zugeordneter Kanalrahmen ist.

21. Verfahren nach Anspruch 18, dadurch gekennzeichnet, daß der Schritt zum Übertragen mehrfach durchgeführt wird.

22. Verfahren nach Anspruch 21, dadurch gekennzeichnet, daß der Schritt zum Übertragen dreimal durchgeführt wird.

23. Verfahren nach Anspruch 18, dadurch gekennzeichnet, daß jeder Datenschlitz in jedem Meldungsrahmen einem unterschiedlichen Sender/Empfänger zugeordnet wird.

24. Verfahren nach Anspruch 18, dadurch gekennzeichnet, daß jeder Datenschlitz mehrere Datenbits enthält, daß die Datenmeldung Meldungsbits enthält und daß jedes Meldungsbit durch mehrere Datenbits spezifiziert wird.

25. Verfahren nach Anspruch 18, dadurch gekennzeichnet, daß es ferner den Schritt zum Codieren jeder Datenmeldung mit Fehlerdetektionscodierung enthält.

## Revendications

1. Procédé pour transmettre un message de données entre une station de commande et un émetteur/récepteur dans un système de communication AMRT, dans lequel un canal de communication AMRT est établi à un premier niveau de puissance entre la station de commande et l'émetteur/récepteur, comprenant les étapes suivantes :

on affecte une ou plusieurs trames du système de communication AMRT à titre de trames de message, chaque trame de message comprenant un ensemble de créneaux de données; et
on émet le message de données vers l'émetteur/récepteur à un second niveau de puissance supérieur au premier niveau de puissance, sur un ou plusieurs des créneaux de données de chacune des trames de message.

2. Procédé selon la revendication 1, dans lequel chaque trame de message comprend en outre des créneaux de canal de correction en avant, des créneaux de canal de synchronisation et des créneaux de repos.

3. Procédé selon la revendication 1, dans lequel chaque trame de message est une trame de canal associé lent du système de communication AMRT.

4. Procédé selon la revendication 1, dans lequel l'étape d'émission est effectuée plusieurs fois.

5. Procédé selon la revendication 4, dans lequel l'étape d'émission est effectuée trois fois.

6. Procédé selon la revendication 1, dans lequel chaque créneau de données dans chaque trame de message est affecté à un émetteur/récepteur différent.

7. Procédé selon la revendication 1, dans lequel chaque créneau de données comprend plusieurs bits de données, le mot de code de données comprend des bits de message, et chaque bit de message est spécifié par plusieurs bits de données.

8. Procédé selon la revendication 1, comprenant en outre l'étape de codage du message de données en employant un codage avec détection d'erreur, avant l'étape d'émission.

9. Système de communication AMRT, comprenant :

des moyens pour établir un canal de communication AMRT à un premier niveau de puissance entre une station de commande et un émetteur/récepteur, le canal de communication AMRT comprenant un ou plusieurs créneaux temporels de chacune d'une ou de plusieurs trames AMRT;
des moyens pour affecter des trames AMRT sélectionnées à titre de trames de message, chaque trame de message comprenant un ensemble de créneaux de message; et
des moyens pour émettre un message de données vers l'émetteur/récepteur à un second niveau de puissance, supérieur au premier niveau de puissance, sur un ou plusieurs des créneaux de message dans chaque trame de message.

10. Système selon la revendication 9, dans lequel chaque trame de message comprend en outre des créneaux de canal de correction en avant, des créneaux de canal de synchronisation et des créneaux de repos.

11. Système selon la revendication 9, dans lequel chaque trame de message sélectionnée est une trame de canal associé lent.

12. Système selon la revendication 9, dans lequel le message de données est émis plusieurs fois.

13. Système selon la revendication 12, dans lequel le message de données est émis trois fois.

14. Système selon la revendication 9, dans lequel chaque créneau de données dans chaque trame de message est affecté à un émetteur/récepteur différent.

15. Système selon la revendication 9, dans lequel chaque créneau de données comprend un ensemble de bits de données, le message de données comprend des bits de message, et chaque bit de message est spécifié par plusieurs bits de données.

16. Système selon la revendication 9, dans lequel le message de données est codé.

17. Système selon la revendication 16, dans lequel le message de données est codé en employant un codage avec détection d'erreur par CRC.

18. Procédé pour transmettre des messages de données dans un système de communication AMRT, comprenant les étapes suivantes :

on affecte un ensemble de trames AMRT à titre de trames de message, chaque trame de message comprenant un ensemble de créneaux de données, dans lequel un ou plusieurs des créneaux de données de chaque trame de message sont affectés sous la forme d'un canal de communication séparé pour chacun d'un ensemble d'émetteurs/récepteurs, et dans lequel les créneaux de données restants de chaque trame acheminent une information de communication qui est émise à un premier niveau de puissance; et
on émet un message de données sur chaque canal de communication séparé à un second niveau de puissance supérieur au premier niveau de puissance.

19. Procédé selon la revendication 18, dans lequel chaque trame de message comprend en outre des créneaux de canal de correction en avant, des créneaux de canal de synchronisation et des créneaux de repos.

20. Procédé selon la revendication 18, dans lequel chaque trame de message est une trame de canal associé lent.

21. Procédé selon la revendication 18, dans lequel l'étape d'émission est effectuée plusieurs fois.

22. Procédé selon la revendication 21, dans lequel l'étape d'émission est effectuée trois fois.

23. Procédé selon la revendication 18, dans lequel chaque créneau de données dans chaque trame de message est affecté à un émetteur/récepteur différent.

24. Procédé selon la revendication 18, dans lequel chaque créneau de données comprend plusieurs bits de données, le message de données comprend des bits de message, et chaque bit de message est spécifié par plusieurs bits de données.

25. Procédé selon la revendication 18, comprenant en outre l'étape de codage de chaque message de données en employant un codage avec détection d'erreur.

## FIG. 1

PRIOR ART

CONTROL AND PROCESSING UNIT 130

VOICE CHANNEL TRANSCEIVER 150

CONTROL CHANNEL TRANSCEIVER 160

MSC 140

BASE STATION 110

VOICE AND CONTROL CHANNEL TRANSCEIVER 170

PROCESSING UNIT 180

MOBILE 120

14

FIG. 2
PRIOR ART

TCH (TRAFFIC CHANNEL)
— FULL RATE
— HALF RATE

SC (SIGNALING CHANNEL)

BCCH (BROADCAST CONTROL CHANNEL) DOWNLINK
— FCCH (FREQUENCY CORRECTION CHANNEL, DOWNLINK)
— SCH (SYNCHRONIZATION CHANNEL, DOWNLINK)

CCCH (COMMON CONTROL CHANNEL)
— PCH (PAGING)
— AGCH (ACCESS GRANT) } (DOWNLINK)
— RACH (RANDOM ACCESS CHANNEL, UPLINK)

DCCH (DEDICATED CONTROL CHANNEL, MS AUTHENTICATION, LOCATION UPDATES ETC.)
— FACCH (FAST ASSOCIATED CONTROL CHANNEL)
— SACCH (SLOW ASSOCIATED CONTROL CHANNEL)
— SDCCH (STANDALONE DEDICATED CONTROL CHANNEL)

FIG. 3

MSC

MU₁

MU₂

MUz

FIG. 4

100 INPUT MESSAGE

102 ENCODE MESSAGE

104 DIVIDE MESSAGE INTO PACKETS

106 TRANSMIT PACKETS

108 SAMPLE RECEIVED PACKETS

110 DECODE BITS

112 ERROR?

YES

NO

114 DISPLAY MESSAGE

EP 0 872 047 B1

## FIG. 5

| FCH | FCH | IDLE | IDLE | SCH | SCH | IDLE | IDLE | DATA | DATA | DATA | DATA | DATA | DATA | DATA | DATA | DATA | DATA | DATA | DATA | DATA | DATA | DATA | DATA | DATA | DATA | DATA | DATA |
|-----|-----|------|------|-----|-----|------|------|------|------|------|------|------|------|------|------|------|------|------|------|------|------|------|------|------|------|------|------|